# EUROPÄISCHE PATENTSCHRIFT

(11) **EP 4 411 428 B1**
(45) Veröffentlichungstag und Bekanntmachung des Hinweises auf die Patenterteilung: **13.08.2025**
(21) Anmeldenummer: 23154593.0
(22) Anmeldetag: 02.02.2023
(51) Int. Cl.: G01V 8/20, F16P 3/14, G08B 13/183

(54) **LICHTVORHANG**
LIGHT CURTAIN
RIDEAU LUMINEUX

(43) Veröffentlichungstag der Anmeldung: 07.08.2024
(73) Patentinhaber: Leuze electronic GmbH + Co. KG, 73277 Owen/Teck (DE)
(72) Erfinder: Heckmayr, Alexander, 86807 Buchloe (DE); Olbrich, Sebastian, 80992 München (DE); Feller, Bernhard, 86316 Friedberg (DE); Tkach, Gennady, 81373 München (DE); Auer, Robert, 85540 Haar (DE)
(74) Vertreter: Ruckh, Rainer Gerhard

(56) Entgegenhaltungen:
- EP-A1- 3 770 646
- EP-A2- 2 444 825
- US-A1- 2013 221 204
- US-A1- 2015 316 410

## Beschreibung

Die Erfindung betrifft einen Lichtvorhang.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Zur Erhöhung der Nachweisempfindlichkeit des Lichtvorhangs werden die Empfangssignale in Verstärkern verstärkt, bevor sie der Auswerteeinheit zugeführt werden.

Fehlfunktionen der Verstärker können zu Fehldetektionen bei der Objekterfassung führen.

Die US 2015 / 0 316 410 A1 betrifft einen Lichtvorhang mit einer Reihenanordnung von Lichtstrahlen emittierenden Sendern und einer Reihenanordnung von Lichtstrahlen empfangenden Empfängern, wobei die Sender und die Empfänger von einem Controller angesteuert werden. Mit dem Lichtvorhang wird ein Türbereich überwacht. Bei Registrieren eines eindringenden Objekts löst der Lichtvorhang eine Alarmmeldung aus. Bei diesem Lichtvorhang wird ein Test derart durchgeführt, ob ein Empfänger Lichtstrahlen von einem zugeordneten Empfänger empfängt. Zudem wird dabei geprüft, ob hierbei eine hinreichende Signalreserve vorhanden ist.

Die EP 2 444 825 A2 betrifft ein Lichtvorhang, welcher zur Detektion in einem Überwachungsbereich dient und eine Anordnung von Strahlachsen bildenden Sendern und Empfängern aufweist. Die Sender und Empfänger der Strahlachsen sind einzeln oder zu mehreren nacheinander aktivierbar. Die Lichtstrahlen des Senders einer Strahlachse sind bei freiem Überwachungsbereich auf den Empfänger dieser Strahlachse geführt. Mit einer Auswerteeinheit wird in Abhängigkeit der Empfangssignale an den Ausgängen der Empfänger ein Objektfeststellungssignal generiert. Die Sender bilden wenigstens eine Senderkaskade. Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar. Die Empfänger bilden wenigstens eine Empfängerkaskade. Die Empfänger sind mittels einer zweiten einzeln oder zu mehreren aktivierbar. Die Empfangssignale werden ohne einzelne Vorverstärkung. Analogschalter und/oder Impedanzwandler pro Empfänger einem gemeinsamen Gruppenverstärker zugeführt.

Die EP 3 770 646 A1 betrifft einen Lichtvorhang mit einer Sendereinheit, welche eine Reihenanordnung von Lichtstrahlen emittierenden Sendern aufweist, mit einer Empfängereinheit, welche eine Reihenanordnung von Lichtstrahlen empfangenden Empfängern aufweist und mit einer Auswerteeinheit, in welcher in Abhängigkeit von Empfangssignalen der Empfänger ein Objektfeststellungssignal generiert wird. Den Empfängern ist eine Anordnung mit Verstärkern zugeordnet, dass den einzelnen Empfängern Ansteuerelemente zugeordnet sind, die von Steuermitteln gesteuert sind. Der oder die Verstärker beziehen ihre Spannungsversorgung aus einem Potential P1 und ihren Massebezug aus einem Potential P2. Die Ansteuerelemente beziehen ihre Spannungsversorgung aus einem Potential P3 und ihren Massebezug aus einem Potential P4. Das Potential P1 ist höher als das Potential P3. Das Potential 3 ist höher als das Potential 2. Das Potential P2 ist höher als das Potential P 4.

Die in DE 10 2012 101 431 A1 beschriebene Sensoranordnung umfasst eine Anordnung von Lichtvorhängen sowie einen Trigger-Generator, welcher zyklisch Trigger-Signale generiert. Jedes Trigger-Signal wird den Lichtvorhängen zugeführt, wobei in jedem Lichtvorhang durch ein empfangenes Trigger-Signal nach einer vorgegebenen Verzögerungszeit ein Messvorgang gestartet wird.

Der Erfindung liegt die Aufgabe zugrunde, einen Lichtvorhang der eingangs genannten Art bereitzustellen, mit welchem eine sichere Objektdetektion durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern, mit einer Anordnung von Lichtstrahlen empfangenden Empfängern, und mit einer Anordnung von Verstärkern, in welchen Empfangssignale der Empfänger verstärkt werden. In einer Auswerteeinheit wird in Abhängigkeit der verstärkten Empfangssignale ein Objektfeststellungssignal in Form eines binären Schaltsignals generiert, dessen Schaltzustände angeben, ob ein Objekt im Überwachungsbereich vorhanden ist oder nicht. Wenigstens eine Testeinrichtung ist vorhanden, mittels derer Verstärkungseigenschaften der Verstärker innerhalb vorgegebener Zeitintervalle getestet werden. Eine Adressiereinheit ist vorhanden, mittels derer eine Adressierung der Empfänger und Verstärker durchgeführt wird. Mit der Adressiereinheit werden die Zeitintervalle zur Durchführung von Tests der Verstärker vorgegeben.

Die Erfindung betrifft weiterhin ein entsprechendes Verfahren.

Der erfindungsgemäße Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der Lichtvorhang auch als Reflexions-Lichtvorhang ausgebildet sein. Dann sind die Sender und Empfänger in einer gemeinsamen Sender-/Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Erfindungsgemäß weist der Lichtvorhang eine Testeinrichtung auf, mittels derer den Empfängern zugeordnete Verstärker innerhalb vorgegebener Zeitintervallen getestet werden, wodurch Fehlfunktionen der Verstärker aufgedeckt werden können. Die Testung der Verstärker erfolgt somit zeitgesteuert innerhalb der fest vorgegebenen Zeitintervalle.

Vorteilhaft wird in der Testeinrichtung bei Aufdeckung eines Fehlers eines Verstärkers eine Fehlermeldung generiert oder der Lichtvorhang wird stillgesetzt.

Dadurch können Fehldetektionen bei der Objekterkennung bedingt durch Fehlfunktionen sicher vermieden werden.

Erfindungsgemäß ist eine Adressiereinheit vorhanden, mittels derer eine Adressierung der Empfänger und Verstärker durchgeführt wird. Mit der Adressiereinheit werden die Zeitintervalle zur Durchführung von Tests der Verstärker vorgegeben.

Die Adressiereinheit gibt die Zeitintervalle zur Testung der Verstärker fest vor, so dass die Testung der Verstärker insbesondere in regelmäßigen Zeitabständen erfolgt.

Gemäß einer konstruktiv vorteilhaften Ausgestaltung weist die Adressiereinheit eine Schiebekette auf.

Gemäß einer ersten Variante wird ein Zeitintervall durch wenigstens eine Leeradresse vorgegeben.

Durch die Adressiereinheit werden die Empfänger und deren zugeordnete Verstärker vorteilhaft zyklisch einzeln nacheinander aktiviert. Innerhalb eines Zyklus wird durch die wenigstens eine Leeradresse das oder die Zeitintervalle zur Durchführung von Verstärkertests vorgegeben.

Gemäß einer zweiten Variante wird ein Zeitintervall durch einen Leertakt vorgegeben.

Ein Leertakt kann dadurch vorgegeben werden, dass wenigstens ein Zeitintervall, innerhalb dessen ein Empfänger aktiviert ist, verlängert wird, so dass in der Verlängerung des Zeitintervalls Verstärkertests durchgeführt werden.

Alternativ kann bei einer zyklischen Aktivierung von Empfängern innerhalb von Aktivierungszeitintervallen innerhalb jedes Zyklus zusätzlich zu den Aktivierungszeitintervallen ein Zeitintervall zur Durchführung von Verstärkertests vorgesehen werden.

Besonders vorteilhaft werden Tests von Verstärkern durchgeführt, wenn keiner der Empfänger und/oder Sender aktiviert sind.

Verstärkertests werden dann durchgeführt, wenn die Empfänger kein Sendelicht von den zugeordneten Sendern empfangen oder wenn diese nicht aktiviert sind. Die Verstärker werden dann im Reihenmodus der Empfänger getestet.

Vorteilhaft ist die Adressiereinheit in einer Steuerung zugeordnet. Insbesondere ist die Adressiereinheit in der Steuerung integriert.

Besonders vorteilhaft werden in der Steuerung Testsignale zur Testung der Verstärker generiert. In diesem Fall werden vorteilhaft Testsignale von den Verstärkern in die Steuerung rückgelesen und dort mit vorgegebenen Erwartungshaltungen verglichen. Insbesondere sind die Erwartungshaltungen von Sollwerten gebildet.

Generell wird durch Rücklesen der Testsignale von einem Verstärker die Reaktion dieses Verstärkers auf die Testsignale erfasst, wobei anhand einer Reaktion festgestellt wird, ob der Verstärker fehlerfrei arbeitet oder nicht.

Besonders vorteilhaft werden mit Testsignalen unterschiedliche Verstärkungseigenschaften von Verstärkern getestet.

In diesem Fall werden z.B. Erwartungshaltungen zur Prüfung der von einem Verstärker rückgelesenen Testsignale durch mehrere Schwellwerte definiert, mit denen die rückgelesenen Testsignale verglichen werden.

Beispielsweise kann für ein kleines Testsignal ein niedriger Schwellwert vorgegeben werden, den das Testsignal im fehlerfreien Fall nicht überschreiten darf.

Weiterhin kann für ein großes, hohes Testsignal ein hoher Schwellwert vorgegeben werden, den das Testsignal überschreiten soll.

Zudem kann das Summensignal eines großen und kleinen Testsignals mit einem vorgegebenen weiteren Schwellwert verglichen werden, den das Summensignal im fehlerfreien Zustand überschreiten muss.

Schließlich kann auch das Zeitverhalten von rückgelesenen Testsignalen geprüft werden, in dem dieses Testsignal zeitlich verzögert mit wenigstens einem Schwellwert bewertet wird.

Generell sind die Testsignale Strom- oder Spannungssignale. Um eine bessere Resistenz gegen EMV-Störungen zu erhalten, können Differenzsignale dieser Strom- oder Spannungssignale betrachtet werden.

Der Umfang der Testung kann vorteilhaft dahingehend erweitert sein, dass ein in der Steuerung vorhandener zusätzlicher Verstärker mit den Testsignalen mitgetestet wird.

Gemäß einer ersten Ausgestaltung ist jedem Empfänger ein Verstärker zugeordnet.

Gemäß einer zweiten Ausgestaltung ist nur ein Verstärker vorhanden, der in einem Multiplexbetrieb derart betrieben ist, dass mit diesem zeitlich nacheinander die Empfangssignale der Empfänger verstärkt werden.

Gemäß einer dritten Ausgestaltung sind Gruppen von Empfängern jeweils einem Verstärker zugeordnet. Jeder Verstärker ist in einem Multiplexbetrieb derart betrieben, dass mit diesem zeitlich nacheinander die Empfangssignale der Empfänger der jeweiligen Gruppe verstärkt werden.

Die jeweils einem Verstärker zugeordnete Gruppe von Empfängern kann insbesondere eine Kaskade bilden. Eine Kaskade ist eine separate Hardware-Einheit, beispielsweise dadurch realisiert, dass deren Empfänger auf einer Leiterplatte angeordnet sind.

Generell ist zur Durchführung des oder eines Multiplexbetriebs eine Signalauswahleinheit vorhanden.

Insbesondere ist die Signalauswahleinheit ein Multiplexer.

Besonders vorteilhaft werden einer Signalauswahleinheit Testsignale an den zugeordneten Verstärker ausgegeben.

Die Testsignale können hierzu von der Adressiereinheit der jeweiligen Signalauswahleinheit zur Verfügung gestellt werden.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Die Erfindung wird im Folgenden anhand der Zeichnungen erläutert. Es zeigen:
- Figur 1:: Schematische Darstellung eines Ausführungsbeispiels der erfindungsgemäßen Lichtvorhänge.
- Figur 2:: Empfangsseitige Schaltungsanordnung für den Lichtvorhang gemäß Figur 1.
- Figur 3:: Ausführungsbeispiele für Kopplungsschaltungen für die Schaltungsanordnung gemäß Figur 2.
- Figur 4:: Zeitdiagramme für verstärkte Empfangssignale von Empfängern des Lichtvorhangs mit einer ersten Variante einer Einspeisung von Testsignalen.
- Figur 5:: Zeitdiagramme für verstärkte Empfangssignale von Empfängern des Lichtvorhangs mit einer zweiten Variante einer Einspeisung von Testsignalen.

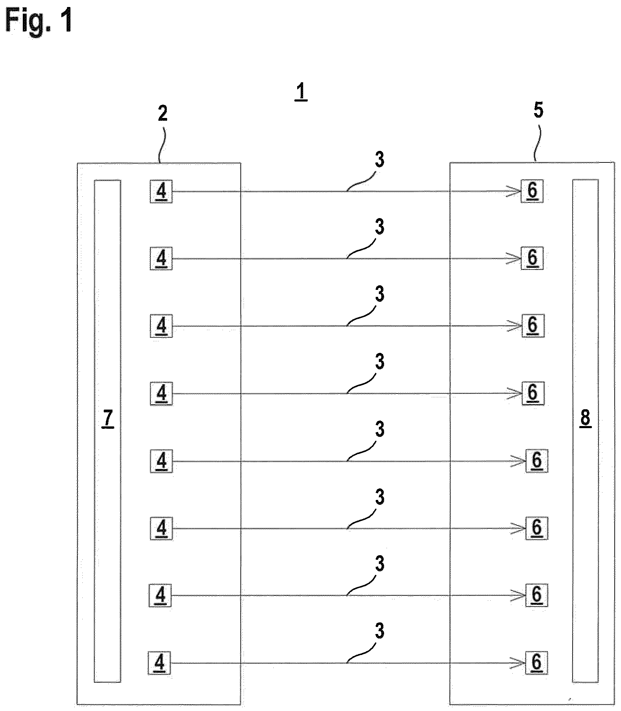

Figur 1 zeigt den prinzipiellen Aufbau des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfänger 6 ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

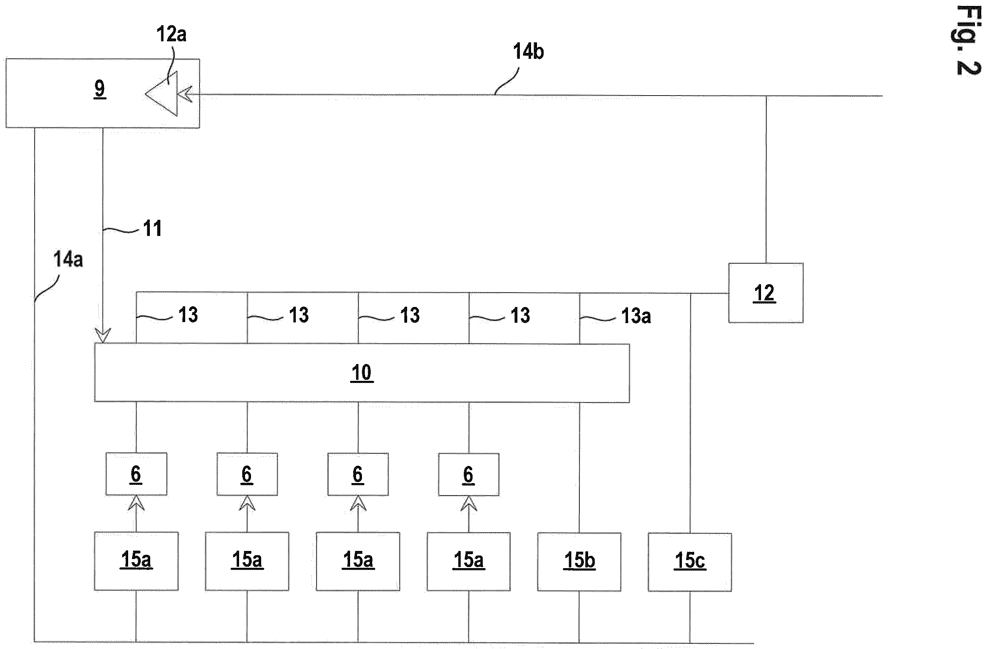

Figur 2 zeigt eine empfangsseitige Schaltungsanordnung für den Lichtvorhang 1 gemäß Figur 1.

Der Übersichtlichkeit halber sind nur vier der Empfänger 6 des Lichtvorhangs 1 in Figur 2 dargestellt.

Die Schaltungsanordnung weist eine Steuerung 9 auf, die im vorliegenden Fall Bestandteil der Auswerteeinheit 8 ist. Die Steuerung 9 steuert eine Signalauswahleinheit in Form eines Multiplexers 10 durch Ausgabe von Steuersignalen 11. Dadurch sind in einem Multiplexbetrieb die Empfänger 6 zeitlich nacheinander einem Verstärker 12 zugeschaltet. Dadurch ist nur ein Verstärker 12 erforderlich, um die Empfangssignale aller Empfänger 6 zu verstärken.

Die Anordnung gemäß Figur 2 kann auch auf mehrere Verstärker 12 erweitert sein, wobei dann jedem Verstärker 12 eine Gruppe von Empfängern 6 zugeordnet ist. Auch kann jedem Verstärker 12 ein Empfänger 6 zugeordnet sein.

In der Steuerung 9 ist eine Adressiereinheit vorhanden, die beispielsweise eine Schiebekette aufweist. Mit der Adressiereinheit werden die Empfänger 6 zyklisch einzeln nacheinander aktiviert. Hierzu weist die Schiebekette eine Anordnung von Schieberegisterelemente auf, wobei jedem Empfänger 6 ein Schieberegisterelement zugeordnet ist.

Der Verstärker 12 wird im Multiplexbetrieb derart betrieben, dass über die Leitungen 13 der jeweils aktivierte Empfänger 6 dem Verstärker 12 zugeschaltet wird, so dass dann dessen Empfangssignale in diesem Verstärker 12 verstärkt werden.

Erfindungsgemäß wird der Verstärker 12 in vorgegebenen Zeitintervallen getestet. Hierzu werden in der Steuerung 9 Testsignale generiert, die über einen Testbus 14a angegeben werden und über Kopplungsschaltungen 15a den Empfängern 6 zugeführt werden.

Weiterhin werden über eine Kopplungsschaltung 15b Testsignale dem Multiplexer 10 zugeführt. Bei der Adressierung über die Adressiereinheit sind nicht nur Adressen zur Adressierung der Empfänger 6 vorgesehen, sondern auch eine zusätzliche Leeradresse, die über die Leitung 13a die Testsignale vom Testbus 14a auf den Verstärker 12 schaltet, um diesen zu testen.

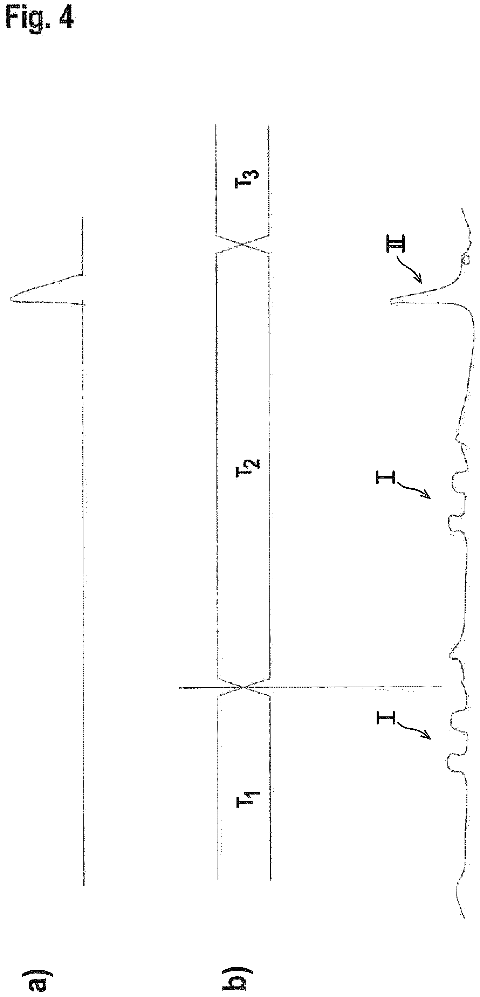

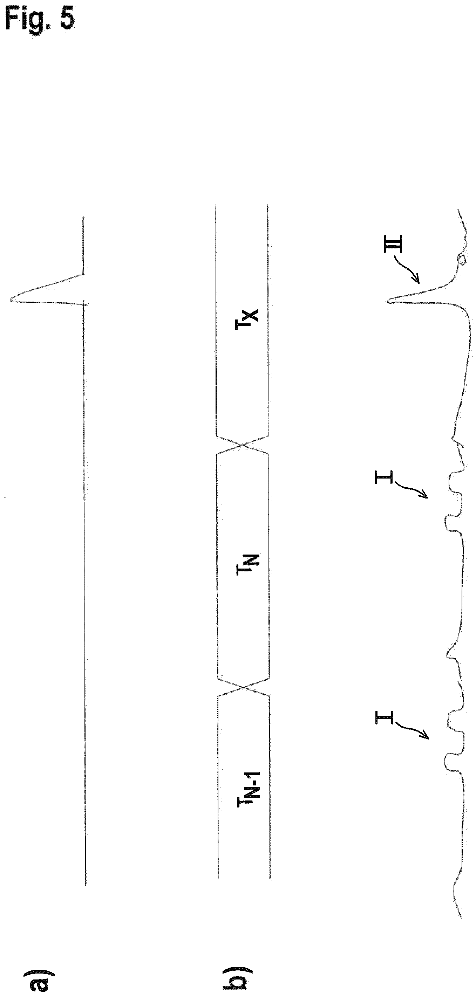

Die Adressierung der Empfänger 6 mit den Adressen der Adressiereinheit führt zur Aktivierung der Empfänger 6 innerhalb vorgegebener Aktivierungszeitintervallen T₁, T₂, ... (in den Figuren 4b, 5b dargestellt). Mit der Leeradresse wird ein zusätzliches Zeitintervall innerhalb jedes Zyklus der Empfängeraktivierung geschaffen, innerhalb dessen die Testung des Verstärkers 12 erfolgt.

Alternativ oder zusätzlich werden Testsignale über die Kopplungsschaltung 15c vom Testbus 14a dem Verstärker 12 zugeführt, um diesen innerhalb eines vorgegebenen Zeitintervalls zu testen.

Die Testsignale werden generell vom Verstärker 12 über einen Sensorsignalbus 14b in die Steuerung 9 rückgelesen, wobei hierzu die rückgelesenen Testsignale in einem weiteren Verstärker 12a an einem Eingang der Steuerung 9 verstärkt werden.

Zur Durchführung von Tests des Verstärkers 12 werden Testsignale von dem Verstärker 12 in die Steuerung 9 rückgelesen und dort mit vorgegebenen Erwartungshaltungen verglichen. Insbesondere sind die Erwartungshaltungen von Sollwerten gebildet.

Dabei können mit Testsignalen generell unterschiedliche Verstärkungseigenschaften von Verstärkern 12 getestet werden.

Generell sind die Testsignale Strom- oder Spannungssignale.

Zur Durchführung der Tests werden die Testsignale insbesondere mit vorgegebenen Schwellwerten bewertet.

In der Testeinrichtung wird bei Aufdeckung eines Fehlers eines Verstärkers 12 eine Fehlermeldung generiert oder der Lichtvorhang 1 wird stillgesetzt.

Vorteilhaft wird der zusätzliche Verstärker 12a mit den Testsignalen mitgetestet.

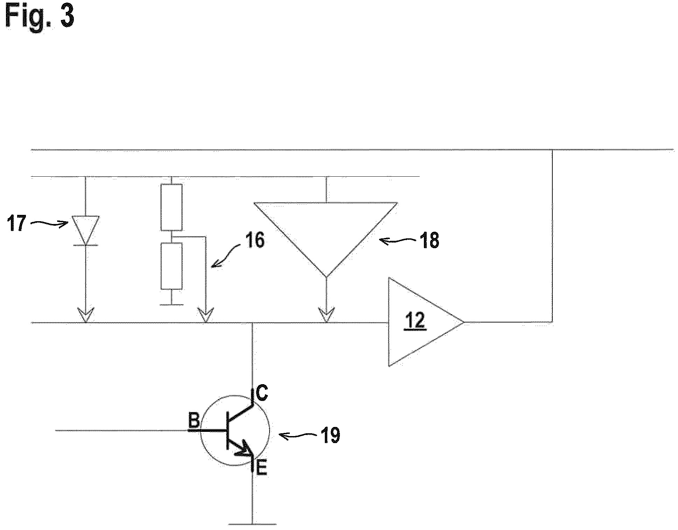

Figur 3 zeigt mögliche Bauteile für die Koppelschaltungen 15a, 15b, 15c gemäß Figur 2.

Diese Bauteile umfassen ein passives Netzwerk, das im vorliegenden Fall ein Spannungsteiler 16 ist, Haltleiterelemente, wie z.B. eine Diode 17, Verstärkerelemente 18 und oder eine Bedämpfungsschaltung 19.

Die Figuren 4a, 4b und 5a, 5b zeigen Ausführungsformen, bei welchen Testsignale nicht über Leeradressen, sondern Leertakte, d.h. definierte zusätzliche Zeitintervalle dem Verstärker 12 zugeführt werden, um diesen zu testen.

Bei der Ausführungsform gemäß den Figuren 4a, 4b werden durch die Adressierung mittels der Adressiereinheit bis auf den zweiten Empfänger 6 alle Empfänger 6 innerhalb gleich großer Aktivierungszeitintervallen T₁, T₃, T₄, ... T_{N} aktiviert, wobei in Figur 4b nur die Aktivierungszeitintervalle T₁ und T₃ dargestellt sind. Das Aktivierungszeitintervall T₂ des zweiten Empfängers 6 ist gegenüber den übrigen Aktivierungszeitintervallen T₁, T₃, T₄, ... T_{N} verlängert.

Figur 4b zeigt den zeitlichen Verlauf der verstärkten Empfangssignale der einzelnen Empfänger 6. Die im Verstärker 12 verstärkten Empfangssignale enthalten Nutzsignale I, die von Lichtstrahlen 3 des zugeordneten Senders 4 im jeweiligen Empfänger 6 generiert werden.

Figur 4a zeigt den zeitlichen Verlauf eines Testsignals. In Figur 4b ist der vom Testsignal stammende Signalanteil des verstärkten Empfangssignals, das vom Testsignal stammt, mit II bezeichnet.

Wie Figur 4b zeigt, wird das Testsignal im verlängerten Aktivierungszeitintervall T₂ des zweiten Empfängers 6 eingekoppelt. Das Testsignal wird so eingekoppelt, dass es nicht mit dem Nutzsignal zusammenfällt und so unabhängig von diesem ausgewertet werden kann.

Die Figuren 5a, 5b zeigen eine Variante der Ausführungsform gemäß den Figuren 4a, 4b. Durch die Adressierung der Empfänger 6 mittels der Adressiereinheit wird jeder Empfänger zyklisch einzeln nacheinander aktiviert. Im vorliegenden Fall werden dadurch in jedem Zyklus insgesamt N Empfänger 6 einzeln nacheinander während Aktivierungszeitintervallen T₁, ... T_{N} aktiviert, wobei alle Aktivierungszeitintervalle T₁, ... T_{N} gleich lang sind, d.h. die gleiche Zeitdauer aufweisen. Figur 5b zeigt die Aktivierungszeitintervalle T_{N-1}, T_{N} der beiden letzten Empfänger 6 im Zyklus.

Innerhalb des Zyklus schließt an das letzte Aktivierungszeitintervall T_{N} das Zeitintervall T_{X} an, in welchem das in der Steuerung 9 generierte Testsignal (Figur 5a) dem verstärkten Empfangssignal aufgeprägt wird (II in Figur 5b), welches über den Sensorsignalbus 14b in die Steuerung 9 rückgelesen wird, um den Verstärker 12 zu testen.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Steuerung
- (10): Multiplexer
- (11): Steuersignal
- (12): Verstärker
- (12a): Verstärker
- (13): Leitung
- (13a): Leitung
- (14a): Testbus
- (14b): Sensorsignalbus
- (15a): Kopplungsschaltung
- (15b): Kopplungsschaltung
- (15c): Kopplungsschaltung
- (16): Spannungsteiler
- (17): Diode
- (18): Verstärkerelement
- (19): Bedämpfungsschaltung
- (I): Nutzsignal
- (II): verstärktes Empfangssignal

## Patentansprüche

1. Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6), und mit einer Anordnung von Verstärkern (12), in welchen Empfangssignale der Empfänger (6) verstärkt werden, und mit einer Auswerteeinheit (8), in welcher in Abhängigkeit der verstärkten Empfangssignale ein Objektfeststellungssignal in Form eines binären Schaltsignals, dessen Schaltzustände angeben, ob ein Objekt im Überwachungsbereich vorhanden ist oder nicht, generiert wird, wobei wenigstens eine Testeinrichtung vorhanden ist, mittels derer Verstärkungseigenschaften der Verstärker (12) innerhalb vorgegebener Zeitintervalle getestet werden, **dadurch gekennzeichnet, dass** eine Adressiereinheit vorhanden ist, mittels derer eine Adressierung der Empfänger (6) und Verstärker (12) durchgeführt wird, und dass mit der Adressiereinheit die Zeitintervalle zur Durchführung von Tests der Verstärker (12) vorgegeben werden.

2. Lichtvorhang (1) nach Anspruch 1, **dadurch gekennzeichnet, dass** ein Zeitintervall durch wenigstens eine Leeradresse vorgegeben wird.

3. Lichtvorhang (1) nach Anspruch 1, **dadurch gekennzeichnet, dass** ein Zeitintervall durch einen Leertakt vorgegeben wird.

4. Lichtvorhang (1) nach einem der Ansprüche 1 bis 3, **dadurch gekennzeichnet, dass** Tests von Verstärkern (12) durchgeführt werden, wenn keiner der Empfänger (6) und/oder Sender (4) aktiviert ist.

5. Lichtvorhang (1) nach einem der Ansprüche 1 bis 4, **dadurch gekennzeichnet, dass** die Adressiereinheit eine Schiebekette umfassend eine Anordnung von Schieberegisterelementen aufweist.

6. Lichtvorhang (1) nach einem der Ansprüche 1 bis 5, **dadurch gekennzeichnet, dass** die Adressiereinheit einer Steuerung (9) zugeordnet ist.

7. Lichtvorhang (1) nach Anspruch 6, **dadurch gekennzeichnet, dass** die Adressiereinheit in der Steuerung (9) integriert ist.

8. Lichtvorhang (1) nach einem der Ansprüche 6 oder 7, **dadurch gekennzeichnet, dass** in der Steuerung (9) Testsignale zur Testung der Verstärker (12) generiert werden.

9. Lichtvorhang (1) nach Anspruch 8, **dadurch gekennzeichnet, dass** Testsignale von den Verstärkern (12) in die Steuerung (9) rückgelesen werden und dort mit vorgegebenen Erwartungshaltungen verglichen sind.

10. Lichtvorhang (1) nach Anspruch 9, **dadurch gekennzeichnet, dass** die Erwartungshaltungen von Sollwerten gebildet sind.

11. Lichtvorhang (1) nach einem der Ansprüche 8 bis 10, **dadurch gekennzeichnet, dass** mit Testsignalen unterschiedliche Verstärkungseigenschaften von Verstärkern (12) getestet werden.

12. Lichtvorhang (1) nach einem der Ansprüche 8 bis 11, **dadurch gekennzeichnet, dass** die Testsignale Strom- oder Spannungssignale sind.

13. Lichtvorhang (1) nach einem der Ansprüche 8 bis 12, **dadurch gekennzeichnet, dass** ein in der Steuerung (9) vorhandener zusätzlicher Verstärker (12a) mit den Testsignalen mitgetestet wird.

14. Lichtvorhang (1) nach einem der Ansprüche 1 bis 13, **dadurch gekennzeichnet, dass** in der Testeinrichtung bei Aufdeckung eines Fehlers eines Verstärkers (12a) eine Fehlermeldung generiert wird oder der Lichtvorhang (1) stillgesetzt wird.

15. Lichtvorhang (1) nach einem der Ansprüche 1 bis 14, **dadurch gekennzeichnet, dass** jedem Empfänger (6) ein Verstärker (12) zugeordnet ist.

16. Lichtvorhang (1) nach einem der Ansprüche 1 bis 14, **dadurch gekennzeichnet, dass** nur ein Verstärker (12) vorhanden ist, der in einem Multiplexbetrieb derart betrieben ist, dass mit diesem zeitlich nacheinander die Empfangssignale der Empfänger (6) verstärkt werden.

17. Lichtvorhang (1) nach einem der Ansprüche 1 bis 16, **dadurch gekennzeichnet, dass** Gruppen von Empfängern (6) jeweils einem Verstärker (12) zugeordnet sind, wobei jeder Verstärker (12) in einem Multiplexbetrieb derart betrieben ist, dass mit diesem zeitlich nacheinander die Empfangssignale der Empfänger (6) der jeweiligen Gruppe verstärkt werden.

18. Lichtvorhang (1) nach einem der Ansprüche 16 oder 17, **dadurch gekennzeichnet, dass** zur Durchführung des oder eines Multiplexbetriebs eine Signalauswahleinheit vorhanden ist.

19. Lichtvorhang (1) nach Anspruch 18, **dadurch gekennzeichnet, dass** die Signalauswahleinheit ein Multiplexer (10) ist.

20. Lichtvorhang (1) nach einem der Ansprüche 18 oder 19, **dadurch gekennzeichnet, dass** von einer Signalauswahleinheit Testsignale an den zugeordneten Verstärker (12) ausgegeben werden.

21. Lichtvorhang (1) nach einem der Ansprüche 1 bis 20, **dadurch gekennzeichnet, dass** dieser ein Sicherheitssensor ist.

22. Verfahren zur Erfassung von Objekten in einem Überwachungsbereich mittels eines Lichtvorhangs (1), mit einer Anordnung von Lichtstrahlen (3) emittierenden Sendern (4), mit einer Anordnung von Lichtstrahlen (3) empfangenden Empfängern (6), und mit einer Anordnung von Verstärkern (12), in welchen Empfangssignale der Empfänger (6) verstärkt werden, und mit einer Auswerteeinheit (8), in welcher in Abhängigkeit der verstärkten Empfangssignale ein Objektfeststellungssignal in Form eines binären Schaltsignals, dessen Schaltzustände angeben, ob ein Objekt im Überwachungsbereich vorhanden ist oder nicht, generiert wird, wobei wenigstens eine Testeinrichtung vorhanden ist, mittels derer Verstärkungseigenschaften der Verstärker (12) innerhalb vorgegebener Zeitintervalle getestet werden, **dadurch gekennzeichnet, dass** eine Adressiereinheit vorhanden ist, mittels derer eine Adressierung der Empfänger (6) und Verstärker (12) durchgeführt wird, und dass mit der Adressiereinheit die Zeitintervalle zur Durchführung von Tests der Verstärker (12) vorgegeben werden.

## Claims

1. Light curtain (1) for detecting objects in a monitoring area, with an arrangement of transmitters (4) emitting light beams (3), with an arrangement of receivers (6) receiving light beams (3), and with an arrangement of amplifiers (12) in which received signals of the receivers (6) are amplified, and with an evaluation unit (8) in which, as a function of the amplified received signals, an object detection signal is generated in the form of a binary switching signal whose switching states indicate whether or not an object is present in the monitoring area, at least one test device being present by means of which amplification properties of the amplifiers (12) are determined within predetermined time intervals, whether an object is present in the monitoring area or not, wherein at least one test device is present, by means of which amplification properties of the amplifiers (12) are tested within predetermined time intervals, **characterised in that** an addressing unit is present, by means of which addressing of the receivers (6) and amplifiers (12) is carried out, and **in that** the time intervals for carrying out tests of the amplifiers (12) are predetermined with the addressing unit.

2. Light curtain (1) according to claim 1, **characterised in that** a time interval is predetermined by at least one blank address.

3. Light curtain (1) according to claim 1, **characterised in that** a time interval is predetermined by an empty clock.

4. Light curtain (1) according to one of claims 1 to 3, **characterised in that** tests of amplifiers (12) are carried out when none of the receivers (6) and/or transmitters (4) is activated.

5. Light curtain (1) according to one of claims 1 to 4, **characterised in that** the addressing unit comprises a shift chain comprising an arrangement of shift register elements.

6. Light curtain (1) according to one of claims 1 to 5, **characterised in that** the addressing unit is assigned to a controller (9).

7. Light curtain (1) according to claim 6, **characterised in that** the addressing unit is integrated in the controller (9).

8. Light curtain (1) according to one of claims 6 or 7, **characterised in that** test signals for testing the amplifiers (12) are generated in the controller (9).

9. Light curtain (1) according to claim 8, **characterised in that** test signals are read back from the amplifiers (12) into the controller (9) and are compared there with predetermined expectations.

10. Light curtain (1) according to claim 9, **characterised in that** the expected positions are formed by setpoint values.

11. Light curtain (1) according to one of claims 8 to 10, **characterised in that** different amplification properties of amplifiers (12) are tested with test signals.

12. Light curtain (1) according to one of claims 8 to 11, **characterised in that** the test signals are current or voltage signals.

13. Light curtain (1) according to one of claims 8 to 12, **characterised in that** an additional amplifier (12a) present in the controller (9) is also tested with the test signals.

14. Light curtain (1) according to one of claims 1 to 13, **characterised in that** an error message is generated in the test device or the light curtain (1) is stopped when a fault of an amplifier (12a) is detected.

15. Light curtain (1) according to one of claims 1 to 14, **characterised in that** an amplifier (12) is assigned to each receiver (6).

16. Light curtain (1) according to one of claims 1 to 14, **characterised in that** only one amplifier (12) is present, which is operated in a multiplex mode in such a way that the received signals of the receivers (6) are amplified with this amplifier in succession.

17. Light curtain (1) according to one of claims 1 to 16, **characterised in that** groups of receivers (6) are each assigned to one amplifier (12), each amplifier (12) being operated in a multiplex mode in such a way that the received signals of the receivers (6) of the respective group are amplified in succession.

18. Light curtain (1) according to one of claims 16 or 17, **characterised in that** a signal selection unit is provided for carrying out the or a multiplex operation.

19. Light curtain (1) according to claim 18, **characterised in that** the signal selection unit is a multiplexer (10).

20. Light curtain (1) according to one of claims 18 or 19, **characterised in that** test signals are output from a signal selection unit to the associated amplifier (12).

21. Light curtain (1) according to one of claims 1 to 20, **characterised in that** this is a safety sensor.

22. Method for detecting objects in a monitoring area by means of a light curtain (1), with an arrangement of transmitters (4) emitting light beams (3), with an arrangement of receivers (6) receiving light beams (3), and with an arrangement of amplifiers (12), in which received signals of the receivers (6) are amplified, and with an evaluation unit (8), in which, depending on the amplified received signals, an object detection signal in the form of a binary switching signal, the switching states of which indicate whether an object is present in the monitoring area, whether an object is present in the monitoring area or not, wherein at least one test device is present, by means of which amplification properties of the amplifiers (12) are tested within predetermined time intervals, **characterised in that** an addressing unit is present, by means of which addressing of the receivers (6) and amplifiers (12) is carried out, and **in that** the time intervals for carrying out tests of the amplifiers (12) are predetermined with the addressing unit.

## Revendications

1. Rideau lumineux (1) pour la détection d'objets dans une zone de surveillance, comportant un ensemble d'émetteurs (4) émettant des faisceaux lumineux (3), comportant un ensemble de récepteurs (6) recevant des faisceaux lumineux (3), comportant un ensemble d'amplificateurs (12) dans lesquels les signaux reçus des récepteurs (6) sont amplifiés, et comportant une unité d'évaluation (8) dans laquelle, en fonction des signaux reçus amplifiés, un signal de détection d'objet est généré sous la forme d'un signal de commutation binaire dont les états de commutation indiquent la présence ou non d'un objet dans la zone de surveillance, au moins un dispositif de test est présent, au moyen duquel les propriétés d'amplification des amplificateurs (12) sont déterminées dans des intervalles de temps prédéterminés, qu'un objet soit présent ou non dans la zone de surveillance, où au moins un dispositif de test est présent, au moyen duquel les propriétés d'amplification des amplificateurs (12) sont testées dans des intervalles de temps prédéterminés, **caractérisé en ce qu'**une unité d'adressage est présente, au moyen de laquelle l'adressage des récepteurs (6) et des amplificateurs (12) est effectué, et **en ce que** les intervalles de temps pour effectuer les tests des amplificateurs (12) sont prédéterminés avec l'unité d'adressage.

2. Rideau lumineux (1) selon la revendication 1, **caractérisé par le fait qu'**un intervalle de temps est prédéterminé par au moins une adresse vierge.

3. Rideau lumineux (1) selon la revendication 1, **caractérisé en ce qu'**un intervalle de temps est prédéterminé par une horloge vide.

4. Rideau lumineux (1) selon l'une des revendications 1 à 3, **caractérisé par le fait que** les tests des amplificateurs (12) sont effectués alors qu'aucun des récepteurs (6) et/ou des émetteurs (4) n'est activé.

5. Rideau lumineux (1) selon l'une des revendications 1 à 4, **caractérisé par le fait que** l'unité d'adressage comprend une chaîne de décalage comprenant un arrangement d'éléments de registre de décalage.

6. Rideau lumineux (1) selon l'une des revendications 1 à 5, **caractérisé par le fait que** l'unité d'adressage est affectée à un dispositif de commande (9).

7. Rideau lumineux (1) selon la revendication 6, **caractérisé en ce que** l'unité d'adressage est intégrée dans le dispositif de commande (9).

8. Rideau lumineux (1) selon l'une des revendications 6 ou 7, **caractérisé par le fait que** les signaux d'essai pour tester les amplificateurs (12) sont générés dans le dispositif de commande (9).

9. Rideau lumineux (1) selon la revendication 8, **caractérisé par le fait que** les signaux de test sont lus par les amplificateurs (12) dans le dispositif de commande (9) et y sont comparés à des attentes prédéterminées.

10. Rideau lumineux (1) selon la revendication 9, **caractérisé par le fait que** les positions attendues sont formées par des valeurs de consigne.

11. Rideau lumineux (1) selon l'une des revendications 8 à 10, **caractérisé par le fait que** différentes propriétés d'amplification des amplificateurs (12) sont testées avec des signaux d'essai.

12. Rideau lumineux (1) selon l'une des revendications 8 à 11, **caractérisé par le fait que** les signaux d'essai sont des signaux de courant ou de tension.

13. Rideau lumineux (1) selon l'une des revendications 8 à 12, **caractérisé par le fait qu'**un amplificateur supplémentaire (12a) présent dans le dispositif de commande (9) est également testé avec les signaux d'essai.

14. Rideau lumineux (1) selon l'une des revendications 1 à 13, **caractérisé par le fait qu'**un message d'erreur est généré dans le dispositif de test ou que le rideau lumineux (1) est arrêté lorsqu'un défaut d'un amplificateur (12a) est détecté.

15. Rideau lumineux (1) selon l'une des revendications 1 à 14, **caractérisé par le fait qu'**un amplificateur (12) est affecté à chaque récepteur (6).

16. Rideau lumineux (1) selon l'une des revendications 1 à 14, **caractérisé par** la présence d'un seul amplificateur (12) qui fonctionne en mode multiplex de telle sorte que les signaux reçus des récepteurs (6) sont amplifiés successivement par cet amplificateur.

17. Rideau lumineux (1) selon l'une des revendications 1 à 16, **caractérisé par le fait que** des groupes de récepteurs (6) sont affectés chacun à un amplificateur (12), chaque amplificateur (12) étant exploité en mode multiplex de manière à ce que les signaux reçus des récepteurs (6) du groupe respectif soient amplifiés successivement avec cet amplificateur (12).

18. Rideau lumineux (1) selon l'une des revendications 16 ou 17, **caractérisé par le fait qu'**une unité de sélection des signaux est prévue pour effectuer l'opération de multiplexage.

19. Rideau lumineux (1) selon la revendication 18, **caractérisée par le fait que** l'unité de sélection des signaux est un multiplexeur (10).

20. Rideau lumineux (1) selon l'une des revendications 18 ou 19, **caractérisé par le fait que** les signaux de test sont émis par une unité de sélection de signaux vers l'amplificateur associé (12).

21. Rideau lumineux (1) selon l'une des revendications 1 à 20, **caractérisé par le fait qu'**il s'agit d'un capteur de sécurité.

22. Procédé de détection d'objets dans une zone de surveillance au moyen d'une rideau lumineux (1) comportant un ensemble d'émetteurs (4) émettant des faisceaux lumineux (3), un ensemble de récepteurs (6) recevant des faisceaux lumineux (3), un ensemble d'amplificateurs (12) amplifiant les signaux reçus des récepteurs (6) et une unité d'évaluation (8) émettant, en fonction des signaux reçus amplifiés, un signal de détection d'objet sous la forme d'un signal de commutation binaire dont les états de commutation indiquent si un objet est présent dans la zone de surveillance, si un objet est présent ou non dans la zone de surveillance, dans lequel au moins un dispositif de test est présent, au moyen duquel les propriétés d'amplification des amplificateurs (12) sont testées dans des intervalles de temps prédéterminés, **caractérisé par** la présence d'une unité d'adressage, au moyen de laquelle l'adressage des récepteurs (6) et des amplificateurs (12) est effectué, et par le fait que les intervalles de temps pour l'exécution des tests des amplificateurs (12) sont prédéterminés avec l'unité d'adressage.
